# EUROPÄISCHE PATENTSCHRIFT

(11) **EP 1 789 695 B1**
(45) Veröffentlichungstag und Bekanntmachung des Hinweises auf die Patenterteilung: **15.05.2013**
(21) Anmeldenummer: 05781816.3
(22) Anmeldetag: 31.08.2005
(51) Int. Cl.: F16D 65/14, F16D 65/16, F16D 65/18

(54) **SCHEIBENBREMSE FÜR EIN FAHRZEUG, INSBESONDERE EIN NUTZFAHRZEUG**
DISC BRAKE FOR A VEHICLE, PARTICULARLY A GOODS-CARRYING VEHICLE
FREIN A DISQUE POUR VEHICULE, NOTAMMENT POUR VEHICULE UTILITAIRE

(30) Priorität: 02.09.2004 DE 102004042576
(43) Veröffentlichungstag der Anmeldung: 30.05.2007
(73) Patentinhaber: KNORR-BREMSE Systeme für Nutzfahrzeuge GmbH, 80809 München (DE)
(72) Erfinder: SPRINGER, Mario, 94535 Eging am See (DE); WIMMER, Josef, 94474 Vilshofen (DE)
(74) Vertreter: Mattusch, Gundula
(86) Internationale Anmeldenummer: PCT/EP2005/009369
(87) Internationale Veröffentlichungsnummer: WO 2006/024512

(56) Entgegenhaltungen:
- DE-A1- 4 032 885
- DE-A1- 4 231 560
- US-B1- 6 311 809

## Beschreibung

Die vorliegende Erfindung betrifft eine Scheibenbremse für ein Fahrzeug, insbesondere ein Nutzfahrzeug gemäß dem Oberbegriff des Anspruchs 1.

Eine solche, vorzugsweise druckluft- oder elektronisch betätigbare und insbesondere in Nutzfahrzeuge einbaubare Scheibenbremse ist aus der US 6 311 809 B1 bekannt. Dabei weist die Zuspannvorrichtung den Hebel, eine daran befestigte Lagerschale und die Wälzrolle auf, die parallel zur Bremsscheibe verläuft und eine Schwenkachse für den Hebel bildet, wobei die Wälzrolle in der Lagerschale einliegt.

Um eine exakte Relativbewegung der Brücke zum Bremssattel zu ermöglichen, ist die Brücke in dem Bremssattel so geführt, dass eine seitliche Fixierung der Brücke gewährleistet ist. Dies bedingt jedoch eine relativ aufwendige Bearbeitung der entsprechenden, miteinander korrespondierenden Teile sowohl des Bremssattels wie auch der Brücke.

Hierzu müssen die Führungsteile des Bremssattels, insbesondere Führungsbohrungen sehr genau ausgedreht werden, während die Führungsbereiche der Brücke durch Zirkularfräsen zu bearbeiten sind.

Beide Bearbeitungsverfahren sind jedoch aufwendig und in bezug auf eine kostengünstige Fertigung eher kontraproduktiv.

Da solche Scheibenbremsen in großen Stückzahlen Verwendung finden, kommt diesem Umstand eine besondere Bedeutung zu.

Hinzu kommt, dass der Bremssattel zur Aufnahme der Brücke entsprechend dimensioniert bzw. gestaltet sein muss, was einen bestimmten Materialeinsatz bedingt, der einer Gewichtsoptimierung, wie sie ständig im Fahrzeugbau angestrebt wird, entgegensteht.

In der DE 40 32 885 A1 ist eine weitere gattungsgemäße Scheibenbremse geoffenbart, bei der die Wälzrolle aus einem Bolzen und darauf gehaltenen Wälzlagern gebildet ist, wobei sich die Wälzlager einerseits an dem Hebel und andererseits an der Brücke abstützen. Eine axiale Sicherung der Wälzlager erfolgt dabei durch Stege an der Brücke, an denen die Wälzlager stirnseitig anliegen.

Der vorliegenden Erfindung liegt die Aufgabe zugrunde, eine Scheibenbremse der gattungsgemäßen Art so weiter zu entwickeln, dass ihre Herstellung einfacher und kostengünstiger wird und eine Gewichtsreduzierung möglich ist.

Diese Aufgabe wird durch eine Scheibenbremse gelöst, die die Merkmale des Anspruchs 1 aufweist.

Durch diese konstruktive Ausbildung der Scheibenbremse wird erreicht, dass die Brücke durch die Zuspannvorrichtung gegen ein seitliches Verschieben gesichert ist, so dass eine einwandfreie Positionierung in bezug auf den Bremssattel gewährleistet ist.

Da nunmehr der Bremssattel insoweit nicht als Führungs- bzw. Arretierteil dient, kann auf eine aufwendige Bearbeitung verzichtet werden. Dies gilt gleichermaßen für die Brücke selbst. Auf die Erstellung und Bearbeitung von Klemmnuten und den Einsatz von Halteklammern kann ebenfalls verzichtet werden, was sich gleichfalls auf eine Kosteneinsparung günstig auswirkt.

Daneben können die baulichen Voraussetzungen, insbesondere des Bremssattels, gegenüber dem Stand der Technik derart verändert werden, dass eine Gewichtseinsparung des Bremssattels möglich ist. Dies vor allem deshalb, weil auf die Ausbildung von Führungsteilen im wesentlichen Umfang verzichtet werden kann. Neben der kostensenkenden Materialeinsparung führt dies zu einer Gewichtsreduzierung des Gesamtsystems, die den Forderungen der Kraftfahrzeugindustrie nach einer Gewichtsoptimierung von Bauteilen entgegenkornmt.

Nach einer vorteilhaften Weiterbildung der Erfindung ist vorgesehen, das Sicherungsmittel als Klammer auszubilden, mit der die als separates Bauteil ausgebildete Wälzrolle einerseits am Hebel gehalten wird und die andererseits in einer angepassten Aufnahme der Brücke einliegt. Dabei kann diese Aufnahme als eine sich quer zur Längserstreckung der Wälzrolle verlaufende Nut ausgebildet sein, deren Seitenwandungen die Begrenzung für die Klammer bilden, so dass ein seitliches Auswandern der Brücke durch die einliegende Klammer verhindert wird.

Die Klammer selbst kann die Wälzrolle im freiliegenden Bereich vollständig umgreifen. Denkbar ist aber auch, diese lediglich partiell an der Wälzrolle anzubringen, jedoch so, dass sie in jedem Fall formschlüssig in die Brücke eingreift.

Zur axialen Verschiebesicherung der separaten Wälzrolle am Hebel ist eine umlaufende Ringnut vorgesehen, in der die am Hebel befestigte Klammer eingelegt sein kann. Diese Ringnut kann auch der Aufnahme eines Haltemittels dienen, beispielsweise in Form eines Stiftes, insbesondere eines Zylinderstiftes oder eines Keiles, der in einer im Hebel vorgesehenen Tasche einliegt und durch den axial auf die Wälzrolle einwirkende Kräfte aufgenommen werden.

Prinzipiell zeichnet sich die neue Scheibenbremse dadurch aus, dass sie aufgrund ihres nunmehr sehr einfachen Aufbaus nicht nur, wie erwähnt, kostengünstig herzustellen ist, sondern auch einfach und entsprechend preiswert montierbar ist.

Die Form und Anordnung der Klammer kann unterschiedlich gewählt sein, ebenso wie die Form und Anordnung des Haltemittels, das bevorzugt in der genannten Ringnut einliegt, ebenso wie die Klammer, jedoch auch an anderer Stelle wirkungsvoll positioniert sein kann.

Die maßliche Ausbildung der in der Brücke vorgesehenen Aufnahme für die Klammer ist so gewählt, dass deren Breite etwa der zugeordneten Dicke der Klammer entspricht, so dass eine exakte Fixierung in seitlicher Richtung an der Zuspanneinrichtung gewährleistet ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: den schematischen Aufbau einer erfindungsgemäßen Scheibenbremse in einem Querschnitt
- Figur 2: eine Einzelheit der Scheibenbremse in einer perspektivischen Ansicht
- Figur 3: ein weiteres Ausführungsbeispiel der Erfindung in einem perspektivischen Teilausschnitt einer Einzelheit
- Figur 4: eine teilweise geschnittene Seitenansicht einer Einzelheit eines weiteren Ausführungsbeispieles

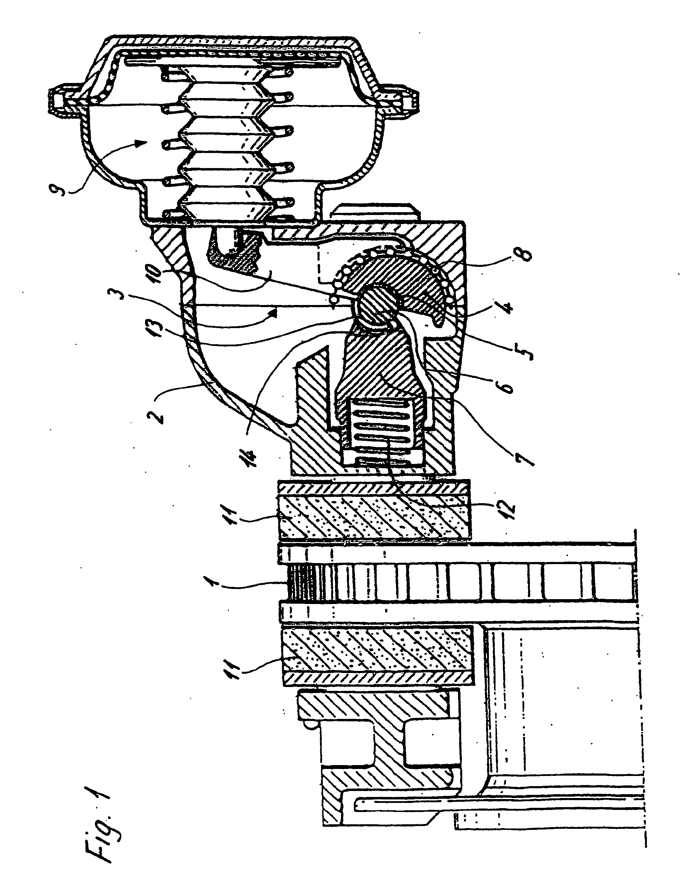

In der Figur 1 ist in schematischer Darstellung eine Scheibenbremse für ein Fahrzeug, insbesondere ein Nutzfahrzeug, in einem Halbschnitt dargestellt, die eine Bremsscheibe 1 aufweist, die an einer nicht dargestellten Achse des Nutzfahrzeuges befestigt ist und von einem Bremssattel 2 umfasst ist, der in Richtung der Bremsscheibe 1 verschiebbar ist.

Im Bremssattel 2 ist eine Zuspannvorrichtung 3 angeordnet, mit der bei einer über einen vorzugsweise pneumatisch betätigten Bremszylinder 9 ausgelösten Bremsung Bremsbeläge 11 an die Bremsscheibe 1 drückbar sind.

Hierzu greift die Zuspannvorrichtung 3 an zwei nicht dargestellte, parallel und mit Abstand zueinander in einer Brücke 7 angeordnete Stellspindeln an. Zur Rückstellung der Brücke 7 und des zugeordneten Bremsbelages 11 ist eine Druckfeder 12 vorgesehen, die sich einerseits am Bremssattel 2 und andererseits an der Brücke 7 abstützt, wobei diese Druckfeder 12 gleichzeitig als Teil einer Führung der Brücke 7 dient.

Die Zuspannvorrichtung 3 weist einen Hebel 10 auf, der mit dem Bremszylinder 9 in Wirkverbindung steht und bei Betätigung des Bremszylinders 9 in Richtung der Bremsscheibe 1 schwenkbar um eine Wälzrolle 6 ist, die parallel zur Ebene der Bremsscheibe 1 verläuft.

Im Bremssattel 2 ist ein Drehlager 8 vorgesehen, an dem sich der in diesem Bereich als Exzenter 4 ausgebildete Hebel 10 abstützt.

Die Wälzrolle 6 ist als separates Bauteil axial und radial gesichert am Hebel 10 befestigt. Dabei ist die Wälzrolle 6 in einer Lagerschale 5 gelagert, die mit dem Hebel 10 bzw. dessen Exzenter 4 verbunden ist.

Andererseits stützt sich die Wälzrolle 6 an der Brücke 7 ab, die zu diesem Zweck entsprechend der Wälzrolle 6 konturiert ist und zusammen mit der Lagerschale 5 ein Lager bildet.

Erfindungsgemäß ist an der Zuspannvorrichtung 3 im Bereich der Wälzrolle 6 ein Sicherungsmittel befestigt, in den vorliegenden Ausführungsbeispielen in Form einer Klammer 13, die formschlüssig in die Brücke 7 eingreift und mit der die Wälzrolle 6 am Hebel gehalten wird. Dabei umgreift die Klammer 13 die Wälzrolle 6 in Umfangsrichtung und liegt gleichzeitig in einer Ausnehmung in Form einer Nut 14 der Brücke 7 ein, wobei die Klammer 13 bereichsweise konzentrisch um die Wälzrolle 6 angeordnet ist, so dass die Schwenkbewegung des Hebels 10 problemlos vollführbar ist.

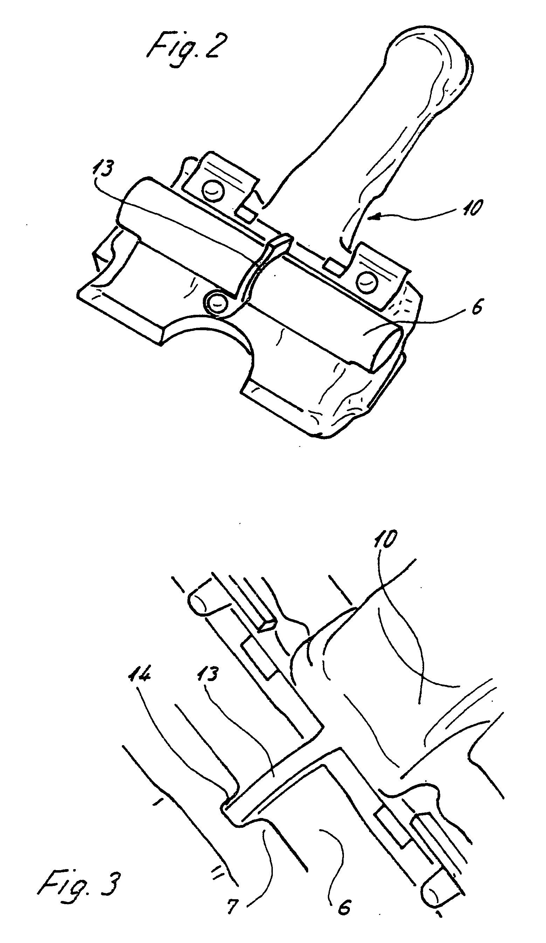

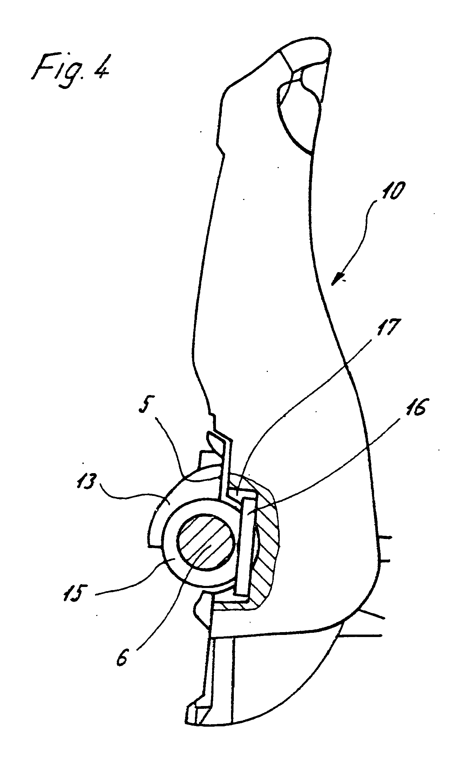

Bei dem in der Figur 2 gezeigten Ausführungsbeispiel ist die Klammer 13 an den beiden Endbereichen am Hebel 10 befestigt, während die Klammer 13 bei dem in der Figur 4 gezeigten Beispiel die Wälzrolle 6 lediglich bereichsweise umgreift.

In der Figur 3 ist der Eingriff der Klammer 13 in die Nut 14 der Brücke 7 zu erkennen, wobei auch zu sehen ist, dass die Breite der Nut 14 der zugeordneten Dicke der Klammer 13 entspricht. Hierdurch liegen die Wandungen der Nut 14 an den zugeordneten Seiten der Klammer 13 an, so dass sich eine Verschiebesicherung in seitlicher Richtung ergibt.

Zur Fixierung der Wälzrolle 6 in Längsachsrichtung und zur Aufnahme von Verschiebekräften, ist die Wälzrolle 6 durch einen Bolzen 16 gesichert, der in einer umlaufenden Ringnut 15 der Wälzrolle 6 einliegt. Hebelseitig ist der Bolzen 16 in einer Tasche 17 unverrückbar eingelassen. Die Ringut 15 ist in ihrer Breite und Tiefe so bemessen, dass der Bolzen 16 spielfrei einliegt.

Grundsätzlich sind auch andere Arten der Fixierung der Wälzrolle 6 denkbar ebenso wie der Befestigung der Klammer 13 am Hebel 10, die bei dem in der Figur 2 gezeigten Beispiel mit dem Hebel 10 verschraubt ist.

### Bezugszeichenliste

| | |
|---|---|
| 1 | Bremsscheibe |
| 2 | Bremssattel |
| 3 | Zuspannvorrichtung |
| 4 | Exzenter |
| 5 | Lagerschale |
| 6 | Wälzrolle |
| 7 | Brücke |
| 8 | Drehlager |
| 9 | Bremszylinder |
| 10 | Hebel |
| 11 | Bremsbelag |
| 12 | Druckfeder |
| 13 | Klammer |
| 14 | Nut |
| 15 | Ringnut |
| 16 | Bolzen |
| 17 | Tasche |

## Patentansprüche

1. Scheibenbremse für ein Fahrzeug, insbesondere ein Nutzfahrzeug, mit einer in einem Bremssattel (2) angeordneten Zuspannvorrichtung (3), mit der bei einer Bremsung über wenigstens eine oder zwei parallel und mit Abstand zueinander in einer Brücke (7) angeordnete Stellspindeln ein Bremsbelag (11) an eine Bremsscheibe (1) drückbar ist, wobei die Zuspannvorrichtung (3) eine Wälzrolle (6) aufweist, die an einem Abstützbereich mit Drehlagern (8) des Bremssattels (2) an einem als Exzenter (4) ausgebildeten schwenkbaren Hebel (10) der Zuspannvorrichtung (3) anliegt, **dadurch gekennzeichnet, dass** zur seitlichen Verschiebesicherung der Brücke (7) am Hebel (10), vorzugsweise im Bereich der Wälzrolle (6), mindestens ein Sicherungsmittel (13) befestigt ist, das formschlüssig in die Brücke (7) eingreift.

2. Scheibenbremse nach Anspruch 1, **dadurch gekennzeichnet, dass** das Sicherungsmittel aus einer die Wälzrolle (6) teilweise umgreifenden Klammer (13) besteht, die in einer Aufnahme der Brücke (7) einliegt.

3. Scheibenbremse nach Anspruch 1 oder 2, **dadurch gekennzeichnet, dass** die Aufnahme als Nut (14) ausgebildet ist.

4. Scheibenbremse nach einem der vorhergehenden Ansprüche, **dadurch gekennzeichnet, dass** die Klammer (13) als konzentrisch angeordnetes Kreissegment ausgebildet ist.

5. Scheibenbremse nach einem der vorhergehenden Ansprüche, **dadurch gekennzeichnet, dass** die Nut (14) in Form, Kontur und weitgehend spielfreiem Abmaß an die Klammer (13) angepasst ist.

6. Scheibenbremse nach einem der vorhergehenden Ansprüche, **dadurch gekennzeichnet, dass** die Klammer (13) in einer umlaufendenen Ringnut (15) der Wälzrolle (6) einliegt.

7. Scheibenbremse nach einem der vorhergehenden Ansprüche, **dadurch gekennzeichnet, dass** im Hebel (10) ein Haltemittel vorgesehen ist, das die als separates Bauteil ausgebildete Wälzrolle (6) in Längsachsrichtung gesichert hält.

8. Scheibenbremse nach einem der vorhergehenden Ansprüche, **dadurch gekennzeichnet, dass** das Haltemittel als Bolzen (16), vorzugsweise als Zylinderbolzen oder Keil ausgebildet ist.

9. Scheibenbremse nach einem der vorhergehenden Ansprüche, **dadurch gekennzeichnet, dass** der Bolzen (16) in der umlaufenden Ringnut (15) der Wälzrolle (6) spielfrei einliegt.

10. Scheibenbremse nach einem der vorhergehenden Ansprüche, **dadurch gekennzeichnet, dass** der Bolzen (16) in einer im Hebel (10) vorgesehenen Tasche (17) einliegt.

11. Scheibenbremse nach einem der vorhergehenden Ansprüche, **dadurch gekennzeichnet, dass** die Klammer (13) mit dem Hebel (10) verschraubt ist.

## Claims

1. Disc brake for a vehicle, in particular a commercial vehicle, the disc brake comprising an application device (3) located in a brake calliper (2), by means of which application device (3) in a braking action a brake pad (11) can be pressed against a brake disc (1) via at least one or two actuating screws arranged parallel to and at a distance from one another in a bridge (7), wherein the application device (3) comprises a contact roller (6) which bears against a pivotable lever (10) of the application device (3) designed as an eccentric (4) in a support region with pivot bearings (8) of the brake calliper (2), **characterised in that** at least one securing means (13) which positively engages with the bridge (7) is mounted on the lever (10), preferably in the region of the contact roller (6), for securing the bridge (7) against lateral displacement.

2. Disc brake according to claim 1, **characterised in that** the securing means consists of a clamp (13) which partially encompasses the contact roller (6) and is installed in a receptacle of the bridge (7).

3. Disc brake according to claim 1 or 2, **characterised in that** the receptacle is designed as a groove (14).

4. Disc brake according to any of the preceding claims, **characterised in that** the clamp (13) is designed as a concentrically arranged circle segment.

5. Disc brake according to any of the preceding claims, **characterised in that** the groove (14) is matched to the clamp (13) in its shape, contour and largely backlash-free dimension.

6. Disc brake according to any of the preceding claims, **characterised in that** the clamp (13) lies in a continuous annular groove (15) of the contact roller (6).

7. Disc brake according to any of the preceding claims, **characterised in that** a holding means securing the contact roller (6), which is a separate component, in the direction of the longitudinal axis is provided in the lever (10).

8. Disc brake according to any of the preceding claims, **characterised in that** the holding means is designed as a stud (16), preferably as a cylindrical stud or a wedge.

9. Disc brake according to any of the preceding claims, **characterised in that** the stud (16) lies without play in the continuous annular groove (15) of the contact roller (6).

10. Disc brake according to any of the preceding claims, **characterised in that** the stud (16) lies in a pocket (17) provided in the lever (10).

11. Disc brake according to any of the preceding claims, **characterised in that** the clamp (13) is bolted to the lever (10).

## Revendications

1. Frein à disque pour un véhicule, en particulier un véhicule utilitaire, comprenant un moyen de serrage de frein (3) disposé dans un étrier de frein (2), moyennant duquel une garniture de frein (11) est pressable contre un disque de frein (1) via au moins une broche de réglage ou deux broches de réglage, disposée(s) en parallèle à un écart l'une de l'autre dans un pont (7), dans lequel ledit dispositif de serrage de frein (3) comprend un rouleau de roulement (6), qui, dans une zone d'appui aux coussinets de pivotement (8) dudit étrier de frein (2), porte contre un levier pivotable (10) dudit dispositif de serrage de frein (3), lequel est configuré sous forme d'un excentrique, **caractérisé en ce qu'**au moins un moyen de sécurité (13) est fixé audit levier (10), de préférence dans la zone dudit rouleau de roulement (6), pour le blocage latéral dudit pont (7) contre le déplacement, ce moyen de sécurité se trouvant en prise positive dans ledit pont (7).

2. Frein à disque selon la revendication 1, **caractérisé en ce que** ledit moyen de sécurité consiste en une agrafe (13) entourant, en partie, ledit rouleau de roulement (6), cette agrafe se posant dans un élément de réception dudit pont (7).

3. Frein à disque selon la revendication 1 ou 2, **caractérisé en ce que ledit** que ledit élément de réception est configuré sous forme d'une rainure (14).

4. Frein à disque selon une quelconque des revendications précédentes, **caractérisé en ce que** ladite agrafe (13) est configurée sous forme d'un segment de cercle en arrangement concentrique.

5. Frein à disque selon une quelconque des revendications précédentes, **caractérisé en ce que** ladite rainure (14) est adaptée en forme, contour et largement en dimension sans jeu à ladite agrafe (13).

6. Frein à disque selon une quelconque des revendications précédentes, **caractérisé en ce que** ladite agrafe (13) se pose dans une rainure annulaire (15) périphérique dudit rouleau de roulement (6).

7. Frein à disque selon une quelconque des revendications précédentes, **caractérisé en ce qu'**un moyen de retenu est prévu dans ledit levier (10), qui tient ledit rouleau de roulement (6), à blocage en sens longitudinal, qui est configuré sous forme d'un élément séparé.

8. Frein à disque selon une quelconque des revendications précédentes, **caractérisé en ce que** ledit moyen de retenu est configuré sous forme d'un boulon (16), de préférence d'un boulon cylindrique ou d'une clavette.

9. Frein à disque selon une quelconque des revendications précédentes, **caractérisé en ce que** ledit boulon (16) se pose sans jeu dans ladite rainure annulaire périphérique (15) dudit rouleau de roulement (6).

10. Frein à disque selon une quelconque des revendications précédentes, **caractérisé en ce que** ledit boulon (16) se pose dans une poche (17) formée dans ledit levier (10).

11. Frein à disque selon une quelconque des revendications 4 à 10, **caractérisé en ce que** ladite agrafe (13) est vissée audit levier (10).
